**Europäisches Patentamt**

**European Patent Office**

**Office européen des brevets**

(11) Veröffentlichungsnummer: **0 057 666**
A1

(12) **EUROPÄISCHE PATENTANMELDUNG**

(21) Anmeldenummer: **82810030.5**

(22) Anmeldetag: **25.01.82**

(51) Int. Cl.³: **B 23 K 11/08**

(30) Priorität: **29.01.81 CH 584/81**

(43) Veröffentlichungstag der Anmeldung: **11.08.82**
**Patentblatt 82/32**

(84) Benannte Vertragsstaaten: **CH DE FR GB IT LI NL**

(71) Anmelder: **Opprecht, Paul, Herrenbergstrasse 10,
CH-8962 Bergdietikon (CH)**

(72) Erfinder: **Opprecht, Paul, Herrenbergstrasse 10,
CH-8962 Bergdietikon (CH)**
Erfinder: **Hoffmann, Hans Willhelm, Kreuzweidstrasse 2,
CH-8967 Widen (CH)**

(74) Vertreter: **Gachnang, Hans Rudolf, Algisserstrasse 33,
CH-8500 Frauenfeld (CH)**

(54) **Kalibrierkranz zu Schweissmaschine.**

(57) Eine Vorrichtung, mit welcher die Überlappung der Kanten beim Schweissen von Blechdosenrümpfen 15 konstant gehalten werden kann. Mittels auf einem einstellbaren Luftkissen gelagerten Kalibrierrollen werden auch ungleiche Rümpfe 15 im Schweisspunkt genau geführt. Eine zusätzliche Beeinflussung, bzw. Korrektur der Überlappung kann von einem nachgeschalteten Überwachungsgerät vorgenommen werden.

**EP 0 057 666 A1**

- 1 -

Kalibrierkranz zu Schweissmaschine

Die Erfindung betrifft ein Kalibrierwerkzeug an einer Schweissmaschine zum Längsnahtschweissen von Dosenrümpfen mit einem Kalibrierrollenkranz in der Schweissebene, bestehend aus kreisförmig angeordneten, eine kreisförmige Oeffnung bildenden, teilweise gefedert gelagerten Diabolorollen.

Beim Schweissen der Längsnähte an Dosenrümpfen müssen sich die beiden Blechränder im Schweisspunkt zwischen den Rollenelektroden immer um den gleichen Betrag überlappen, um eine einwandfreie gleichmässige und dichte Naht zu erhalten. Der Betrag der Ueberlappung wird von einer Führungs- oder Z-Schiene bestimmt, längs welcher die Zargen- oder Blechränder des zu einem zylindrischen Körper (Zarge) gerollten Blechzuschnittes an die Schweissstelle geführt werden. Die starre Führung der Blechkanten durch die Z-Schiene endet jedoch kurz vor der Schweissebene. In der Schweissebene übernimmt ein die noch ungeschweisste Zarge ganz umfassender Kalibrierrollenkranz die Führung.

Bisher genügte es, eine der ringförmig im Kalibrierwerkzeug angebrachten Diabolorollen gefedert zu lagern, um eine allfällige Ueberbeanspruchung der Z-Schiene oder des Rollenkranzes beim Durchgang einer Zarge mit Uebermass zu verhindern oder die Führung einer Zarge mit Untermass dennoch zu gewährleisten.

- 2 -                         0057666

Einhergehend mit der Verminderung der Ueberlappungsbreite der zu verschweissenden Blechränder auf einen Betrag von wenigen Zehnteln von Millimetern, hat es sich gezeigt, dass auf die herkömmliche Weise eine genaue Ueberlappung längs der gesamten Naht nicht mehr gewährleistet werden kann.

Bei einem starren oder mit einer Ueberlastfeder ausgebildetem Kalibrierrollenkranz tritt bei Zargen mit Uebermass (in der Abwicklung) starke Reibung in der Z-Schiene auf. Dies führt nebst grösserem Verschleiss der Z-Schiene auch zu erhöhtem Widerstand und erhöhter Beanspruchung des Schweissrollenantriebes und - bei Verwendung von Drahtzwischenelektroden - zu grösserer Drahtdehnung und gar zu Schlupf zwischen der Elektrode und dem Werkstück. Als Folge ergeben sich verminderte Schweissnahtqualität und ungleiche Abstände zwischen den sich folgenden Dosenrümpfen. Ungleiche Abstände erschweren die Kontrolle über die Schweissung der Nahtenden und Nahtanfänge, sowie die Qualität, die insbesondere bei der Weiterverarbeitung der Zargen von grosser Bedeutung ist.

Die Aufgabe der vorliegenden Erfindung besteht darin, eine Vorrichtung zu schaffen, mit der eine exakte Führung der ungeschweissten Zarge im Schweisspunkt erreicht werden kann.

Eine weitere Aufgabe besteht, die Ueberlappung während des Betriebes von aussen, manuell oder durch ein Ueberwachungsgerät, unabhängig von Zuschnittsdifferenzen des Ausgangsmaterials, konstant zu halten.

Diese Aufgabe wird erfindungsgemäss dadurch gelöst, dass wenigstens eine Rolle in im wesentlichen radialer Richtung zum Zentrum der Kreisförmigen Oeffnung verschiebbar ist und längs des Verschiebeweges der verschiebenden Kraft eine einstellbare konstante Gegenkraft      entgegensetzt.

0057666

Anhand eines illustrierten Ausführungsbeispieles wird die Erfindung näher beschrieben.

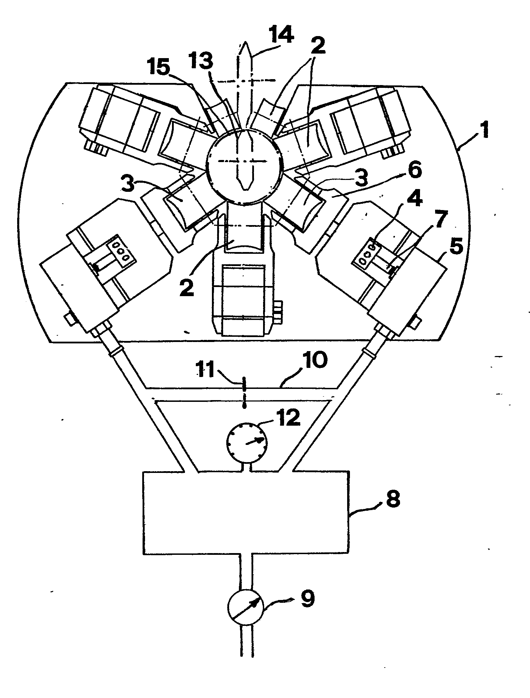

Es zeigt die einzige Figur einen Kalibrierkranz und schematisch angedeutet die Lage der Schweissrollen und der Zarge.

Auf einem Träger 1 sind ringförmig Diabolorollen 2, 3 angebracht. Die mit 2 bezeichneten Rollen sind wohl radial einstellbar, jedoch starr angeordnet und bilden innen Teil einer kreisförmigen Oeffnung. Die beiden Rollen 3 sind ebenfalls in radialer Richtung zur Oeffnung mit einer Stellschraube 4 einstellbar und schliessen in der Grundstellung zusammen mit Rollen 2 die kreisförmige Oeffnung.

Die beiden Rollen 3 liegen jedoch auf einem Gaspolster, beispielsweise in Gestalt einer dosenförmigen Membran 5, auf, d.h. die in einem Joch 6 gelagerten Rollen 3 sind über massearme Längsführungen 7 mit der Membran 5 wirkverbunden.

Die Membranen 5 stehen in Verbindung mit einem Druckspeicher 8, in welchem ein konstanter, über ein Reduzierventil einstellbarer Druck p herrscht. Ein By-pass 10 mit einer Blende 11 kann den Druckausgleich zwischen den beiden Membranen 5 gewährleisten. Mit Hilfe eines Manometers 12 kann der Druck p in den Membranen 5 leicht gemessen und überwacht und den Umständen angepasst werden, damit die Rollen 3 immer mit bequem einstellbarer Kraft F an den vorbeigeführten Zargen 15 anliegen.

Selbstverständlich können die beiden Rollen 3 auch an anderer Stelle am Umfang des Kalibrierkranzes vorgesehen werden. Die Wirkung ändert sich dadurch nicht.

Schematisch sind in der Figur in strichpunktierten Linien die beiden Rollenelektroden 13, 14 sowie die Zarge 15 eingetragen.

Die Führungs- oder Z-Schiene ist nicht sichtbar; sie befindet sich hinter dem Klemmpunkt der beiden Rollen 13, 14.

Die Funktionsweise des Kalibrierkranzes mit pneumatisch gefederten Rollen 3 ist die folgende:

Die noch ungeschweissten. Zargenränder laufen in überlappter Lage, durch die Z-Schiene geführt, gegen die Schweissebene. Kurz vor der Schweissebene verlassen die vorderen Enden der Zarge 15 die Z-Schiene. Die nun nicht mehr geführten sich überlappenden Ränder gelangen nun zwischen die Schweissrollen 13, 14. Infolge des dort auf die sich nur wenig überlappenden Ränder wirkende Kraft und die Erweichung durch die dort entstehende Schweisswärme neigen die Ränder auseinanderzugleiten. Dies wird durch den Kalibrierkranz, der die Zarge in dieser kritischen Phase führt, verhindert.

Gelangt eine ungeschweisste Zarge 15 mit zu grossem Durchmesser - obere Toleranz der Abwicklung der Bleche - in die Schweissebene, so weichen die beiden Rollen 3 entsprechend dem Uebermass zurück. Trotzdem wirken auf die Zargen 15 weiterhin die gleichen Führungskräfte wie bei einer Zarge 15 mit Nenn-Durchmesser. Die Ueberlappung im Schweisspunkt, wo die Führung durch die Z-Schiene nicht mehr vorhanden ist, bleibt damit erhalten und konstant.

Im umgekehrten Sinn folgen die Rollen 3 einer zu kleinen Zarge nach innen und ermöglichen auch dort eine einwandfreie Schweissung.

Nicht alle Bleche, die während eines Arbeitstages verarbeitet werden, verhalten sich gleich. Auch diese Unterschiede, z.B. Blechstärke und Härte, können durch diese Rollen 3 ausgeglichen werden.

Es ist auch denkbar, dass die Schweissnaht durch geeignete Mittel (Monitor) überwacht wird und aufgrund der von der Ueberwachungsvorrichtung festgestellten Veränderungen die Anpresskraft der Rollen 3 auf die Zargen gesteuert wird.

In einer Schweissmaschine ergeben sich bei Verwendung der beschriebenen Vorrichtung folglich eine ganze Reihe von Vorteilen:

Genaue, immer konstante Blechüberlappung im Schweisspunkt und folglich gleichbleibende Schweissqualität,

Minimale Reibung der Blechkanten in der Führungs- oder Z-Schiene, und folglich geringer Verschleiss derselben, Einfache und bei laufender Maschine ein- und verstellbare Schliesskraft, insbesondere bei Aenderung der Blechstärke oder Blechqualität,

Bequeme und schnelle Einstellung der Schliesskraft der Rollen, bzw. des Kalibrierwerkzeuges während des Betriebes, Nur Grobeinstellung des Kalibrierwerkzeuges bei Werkzeugwechsel; Feineinstellung während des Betriebes,

Immer gleichbleibende Kraft der Rollen auf die Zargen dank wegunabhängigen Krafterzeugung.

Gleichmässig gute Schweissqualität unabhängig von Zuschnittoleranzen.

0057666

Patentansprüche

1. Kalibrierwerkzeug an einer Schweissmaschine zum Längsnahtschweissen von Dosenrümpfen mit einem Kalibrierrollenkranz in der Schweissebene, bestehend aus kreisförmig angeordneten, eine kreisförmige Oeffnung bildenden, teilweise gefedert gelagerten Diabolorollen, dadurch gekennzeichnet, dass wenigstens eine Rolle (3) in im wesentlichen radialer Richtung zum Zentrum der kreisförmigen Oeffnung verschiebbar ist und längs des Verschiebeweges der verschiebenden Kraft eine konstante Gegenkraft (F) entgegensetzt.

2. Kalibrierwerkzeug nach Anspruch 1, dadurch gekennzeichnet, dass die Rolle (3) in Wirkverbindung mit einer Gasfeder (5) steht, in welcher ein konstanter Druck (p) vorliegt.

3. Kalibrierwerkzeug nach Anspruch 1, dadurch gekennzeichnet, dass die Kraft (F) einstellbar ist.

4. Kalibrierwerkzeug nach Anspruch 1, dadurch gekennzeichnet, dass die Kraft (F) in Abhängigkeit der von einem Monitor festgestellten Daten angesteuert wird.

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 1 999 805</u> (DYER) <br> * Seite 1, Zeilen 24-54 * | 1-4 |
| | -- | |
| X | <u>FR - A - 2 222 171</u> (SCHMALBACH-LÜBECA) <br> * Seite 5, Zeile 36 - Seite 7, Zeile 19 * <br> & NL - A - 7 403 908 | 1-4 |
| | -- | |
| A | DE - A - 2 827 485 (OPPRECHT) | 1-4 |
| A | <u>US - A - 4 081 649</u> (ALLIED TUBE) | 1-4 |
| | ---- | |

**KLASSIFIKATION DER ANMELDUNG (Int. Cl.³)**

B 23 K 11/08

**RECHERCHIERTE SACHGEBIETE (Int. Cl.³)**

B 23 K 11/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-04-1982 | HOORNAERT |

EPA form 1503.1 06.78